Europäisches Patentamt

European Patent Office

Office européen des brevets

(11) Publication number: **0 075 180**

**B1**

(12) **EUROPEAN PATENT SPECIFICATION**

(45) Date of publication of patent specification: **08.03.89**

(51) Int. Cl.⁴: **G 02 B 6/12,** G 02 B 5/32

(21) Application number: **82108226.0**

(22) Date of filing: **07.09.82**

(54) Holographic light guide.

(30) Priority: **22.09.81 JP 150024/81**

(43) Date of publication of application:
**30.03.83 Bulletin 83/13**

(45) Publication of the grant of the patent:
**08.03.89 Bulletin 89/10**

(84) Designated Contracting States:
**DE FR GB NL**

(56) References cited:
FR-A-2 362 466
LU-A- 65 581
US-A-4 111 523
JOURNAL OF CRYSTAL GROWTH, vol. 20,
1973, pages 251-255; A.A. BALLMAN et al.:
"The growth of single crystalline waveguiding
thin films of piezoelectric sillenites"
OPTICAL SOCIETY OF AMERICA, IEEE -
Conference of laser and electrooptical systems,
San Diego, 7th-9th February 1978, Washington,
US; K. TADA et al.: "TUCC4 Optically activated
thin film optical switch"

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Tada, Koji c/o Osaka Works**
**Sumitomo El. Ind.,Ltd. No. 1-3, Shimaya 1-chome**
**Konohana-ku Osaka (JP)**
Inventor: **Kuhara, Yoshiki c/o Osaka Works**
**Sumitomo El. Ind.,Ltd. No. 1-3, Shimaya 1-chome**
**Konohana-ku Osaka (JP)**

(74) Representative: **Henkel, Feiler, Hänzel & Partner**
**Möhlstrasse 37**
**D-8000 München 80 (DE)**

(56) References cited:
IEEE JOURNAL OF QUANTUM ELECTRONICS,
vol.QE-14, no. 11, November 1978, pages
848-854, IEEE, New York, US; H. HAYASHI et
al.: "Programmable optical guided-wave device
using BI12SIO20 crystal"

Courier Press, Leamington Spa, England.

**Description**

The present invention relates to an optical integrated circuit (IC) provided with an erasable holographic structure. This optical IC includes an optical light guide and is capable of high sensitivity recording, reconstruction or erasure of holograms.

Holographic recording or reconstruction using a beam of coherent light such as that from a He-Ne laser is capable of recording and reproducing a large quantity of information, and holograms can be used as a grating to diffract light. To achieve these results, many optical devices that can record or reconstruct holograms are being developed.

Particularly, intensive efforts are being made by the inventors to develop holographic devices that can be packed in optical ICs which are small, light and have a high recording density. Examples of such developed devices which form an internal state of the art are ones that use a thin As, Se or Te base amorphous film and ones that use a LiNbO₃ waveguide layer having Ti diffused therein. However, the former type is based on a change in phase between the amorphous state and the crystalline state, and is not satisfactory with respect to fidelity and long-term stability. The LiNbO₃ layer used in the latter type has very low photoconductivity. Therefore, neither type of that holographic devices has been put to commercial use.

Prior art document LU—A—65581 discloses an optical integrated circuit comprising a substrate, a light guiding layer formed of LiNbO₃ and provided on said substrate and holographic Fresnel lenses which partially replace the light guiding layer. The Fresnel lenses and the light guiding layer have both a refractive index higher than that of the substrate.

It is further known from prior art document FR—A—2 362 466 to use $Bi_{12}SiO_{20}$ or $Bi_{12}GeO_{20}$ as a material of a holographic recording cell, and from "Journal of Crystal Growth", 20 (1973), pages 251—255 to deposit waveguiding films of $Bi_{12}TiO_{20}$ on substrates of $B_{12}SiO_{20}$ or $Bi_{12}GeO_{20}$.

Finally, Digest TUCC4 of the conference OSA/IEEE of February 1978 describes an optical integrated circuit comprising Ga, Ca-doped $Bi_{12}SiO_{20}$ waveguide films provided on a substrate of $Bi_{12}SiO_{20}$ and mentions the faculty of inducing refractive index variations or strata in a given part of the waveguide films by illuminating said part with an adequate excitation light, said inducing of index variations or strata resulting from the combined photoconductive and electrooptic properties of the bismuth sillenite material.

It is an object of the present invention to provide a new optical integrated circuit that is free from the defects of conventional products, and which enables a bright reproduced light.

The present invention provides an optical integrated circuit provided with an erasable holographic structure, comprising:

—a substrate made of a first bismuth sillenite group substance,

—a light guiding layer which is formed by epitaxial growth on said substrate and made of a second bismuth sillenite group substance that has a higher refractive index than the first bismuth sillenite substance and absorbs little of the light being guided,

—a holographic recording layer which is formed by epitaxial growth in a cavity provided in the light guiding layer and which is made of a third bismuth sillenite group substance having a higher refractive index than the first bismuth sillenite group substance, and a high degree of photoconductivity to enable the recording of an erasable hologram therein, said light guiding layer being provided around said holographic recording layer for guiding laser beams thereto and/or therefrom to record a hologram therein or to reconstruct it, and

—surface electrodes arranged on opposite side of the holographic recording layer for providing a d.c. electric field apt to increase the brightness of the reconstructed light beam during hologram reconstruction.

The present invention provides also a method for manufacturing an optical integrated circuit provided with an erasable holographic structure, comprising the steps of:

(a) forming on a substrate made of a first bismuth sillenite group substance a light guiding layer made of a second bismuth sillenite group substance, by epitaxial growth from a melt, said second bismuth sillenite group substance having a higher refractive index than the first bismuth sillenite group substance and absorbing little of the light being guided,

(b) providing a cavity in said formed light guiding layer,

(c) forming by epitaxial growth in said cavity a holographic recording layer which is made of a third bismuth sillenite group substance having a higher refractive index than the first bismuth sillenite group substance, and a high degree of photo-conductivity to enable the recording of an erasable hologram therein, said light guiding layer being provided around said holographic recording layer for guiding laser beams thereto and/or therefrom to record a hologram therein or to reconstruct it, and

(d) providing surface electrodes arranged on opposite sides of the holographic recording layer for producing a d.c. electric field apt to increase the brightness of the reconstructed light beam during hologram reconstruction.

The invention will be better understood from the following description of an embodiment in conjunction with the drawings, in which

Figure 1 is a schematic representation of an embodiment of the present invention; and

Figure 2 shows the sequence of steps for producing an optical integrated circuit as an embodiment of the present invention.

2

The lattice constants, refractive indexes and melting points of typical bismuth sillenite group substances are listed in following Table 1.

TABLE 1

| Composition | Lattice constant (Å) | Refractive index (633 nm) | Melting point (°C) |
|---|---|---|---|
| $Bi_{12}SiO_{20}$ | 10.10 | 2.5424 | 900 |
| $Bi_{12}GeO_{20}$ | 10.14 | 2.5476 | 935 |
| $Bi_{12}TiO_{20}$ | 10.17 | 2.5619 | 930 |

The substances named in the above Table exhibit very high photoconductivity for light in the spectrum including ultraviolet rays through blue light and, at the same time, they have a dark resistivity as high as $10^{14} \, \Omega \cdot cm$. In view of these advantages, they are known to be capable of recording holograms at very high sensitivity. Thus, the combination of at least two of the three substances in Table 1, bismuth silicon oxide $Bi_{12}SiO_{20}$, (hereunder referred to as BSO), bismuth germanium oxide ($Bi_{12}GeO_{20}$, hereunder referred to as BGO) and bismuth titanium oxide ($Bi_{12}TiO_{20}$, hereunder referred to as BTO), has great potential for making holographic light guides. The light guide that guides light to form the hologram preferably exhibits minimum optical loss.

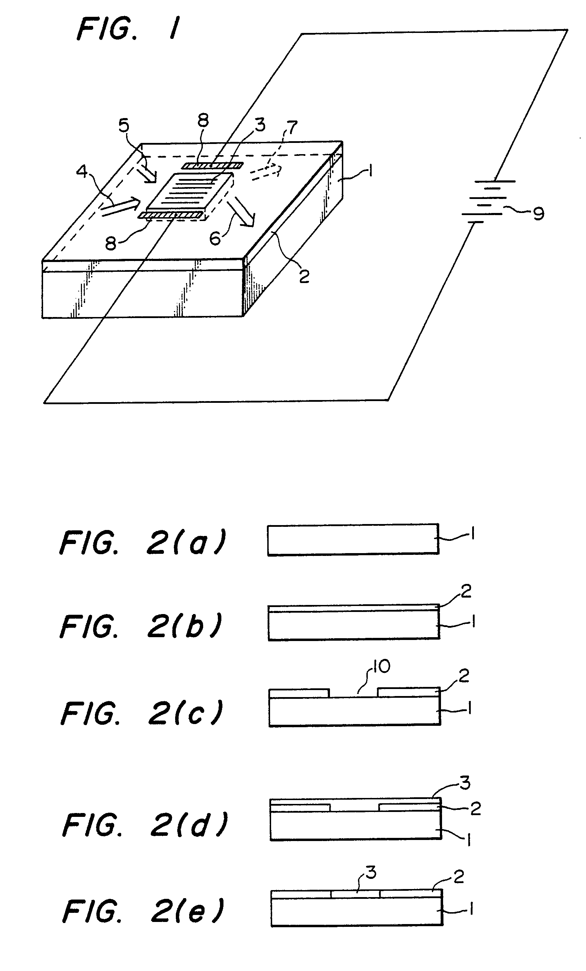

Figure 1 is helpful for understanding the operating theory of the optical integrated circuit according to the present invention comprising a substrate 1, a light guiding layer 2 formed on the substrate 1 and a hologram recording layer 3 which is formed by replacing a part of the light guiding layer 2 by a material capable of recording a hologram.

For the purposes of the present invention, the light guiding layer 2 must have a higher refractive index than the substrate 1 and minimum absorption of the light being guided. The holographic recording layer 3 also has a higher refractive index than the substrate but at the same time it must have some photoconductivity. In the arrangement of Figure 1, laser beams 4 and 5 are routed into the light guiding layer 2 by a conventional prism coupler or some other means and are guided through the light guiding layer 2 and form an interference pattern in the holographic recording layer 3 due to the high photoconductivity effect of the bismuth sillenite group substances. If only laser beam 5 is guided through the recording layer as a reconstructing light after the hologram is recorded on the hologram recording layer 3, reconstructed light 7 carrying the information recorded in the hologram is produced in addition to direct transmitted light 6. The holographic light guide thus produced can be packed in an optical IC and used in many applications including holographic gratings for light diffraction, grating light filters and use for the one dimensional holographic recording of electrical signals.

As another advantage, the holographic light guide that uses a bismuth sillenite layer has high crystal symmetry and is stable against heat. In addition hologram recording is electronic, so cyclic erasure and recording can be achieved by simply exposing the entire surface of the device to light. Furthermore, by applying a d.c. electric field to surface electrodes 8 (see Figure 1) from an external power source 9, electron-hole pairs produced by photoconductive effects are efficiently separated into individual electrons and holes to provide a brighter reproduced light 7.

Typical combinations of the optical integrated circuit according to the present invention are shown in following Table 2.

TABLE 2

| Ex. No. | Substrate (1) | Light-guiding layer (2) | Hologram recording layer |
|---|---|---|---|
| 1 | $Bi_{12}SiO_{20}$ | Ga,Ca-doped $Bi_{12}TiO_{20}$ | undoped $Bi_{12}TiO_{20}$ |
| 2 | $Bi_{12}GeO_{20}$ | same as above | same as above |
| 3 | $Bi_{12}SiO_{20}$ | Ga,Ca-doped $Bi_{12}GeO_{20}$ | undoped $Bi_{12}GeO_{20}$ |

In Examples 1 and 2, the substrates are made of BSO and BGO, respectively, which have low refractive indexes as shown in Table 1. If these materials are used as the substrate, an excellent thin film of BTO can be formed by liquid phase epitaxial growth and, since BTO has a higher refractive index than BSO or BGO, the thin BTO film provides the desired light guiding layer.

In Example 1, the BSO substrate has a melting point about 30°C lower than BTO, so the epitaxial layer must be made from a BTO melt with a fairly large content of $Bi_2O_3$ to lower its melting point. This requirement can be met by combining $Bi_2O_3$ with $TiO_2$ in a molar percent ratio of 92:8.

3

# EP 0 075 180 B1

The light guiding layer must have the lowest light absorption, and a light guiding layer that is colorless and transparent in the visible range can be produced by forming an epitaxial layer from a BTO melt doped with 1 to 10 mole percent of Ga and Ca relative to $TiO_2$.

The holographic recording layer must be made of a material that has high photoconductivity effects and which has a higher refractive index than the substrate. To this end, undoped BTO having high photoconductivity effects in the spectral range of from ultraviolet to blue light (issuing from a He-Cd laser or Ar laser) is used.

Example 3 comprises a BSO substrate, a Ga- and Ca-doped BGO light guiding layer and an undoped BGO holographic recording layer. In Example 3, BGO has a melting point about 35°C higher than BSO, so, as in Example 1, a light guiding layer is formed by epitaxial growth of a BGO melt with a fairly high $Bi_2O_3$ content.

One embodiment of the process for fabricating an optical integrated circuit of the present invention is now described by reference to Figure 2, wherein Figure 2 (a) shows a substrate 1 whose top surface is optically polished and Figure 2 (b) shows a light guiding layer 2 formed on the substrate 1 by epitaxial growth from a Ga- and Ca-doped BTO or BGO melt. Then, as shown in Figure 2 (c), an open space 10 for forming a holographic recording layer is made in the light guiding layer 2. This space is formed by first making a desired pattern by photoetching and then removing the necessary part of the light guiding layer by chemical etching or sputter etching. Subsequently, as shown in Figure 2 (d), an epitaxial (hologram recording) layer 3 is formed from an undoped BTO or BGO melt, and the surface of the resulting layer is polished to completely remove the portion which covers the light guiding layer 2. By this procedure, the holographic light guide of Figure 1 can be produced, but it should be understood that the method of producing the holographic light guide of the present invention is by no means limited to the illustrated example.

As described hereinabove, the present invention is capable of providing an optical integrated circuit that permits high sensitivity holographic recording, reconstruction and erasure. Such optical integrated circuit can be used with great advantage as a device for optical data processing.

## Claims

1. An optical integrated circuit provided with an erasable holographic structure, comprising:
—a substrate (1) made of a first bismuth sillenite group substance,
—a light guiding layer (2) which is formed by epitaxial growth on said substrate (1) and made of a second bismuth sillenite group substance that has a higher refractive index than the first bismuth sillenite substance and absorbs little of the light being guided,
—a holographic recording layer (3) which is formed by epitaxial growth in a cavity provided in the light guiding layer (2) and which is made of a third bismuth sillenite group substance having a higher refractive index than the first bismuth sillenite group substance, and a high degree of photoconductivity to enable the recording of an erasable hologram therein, said light guiding layer (2) being provided around said holographic recording layer (3) for guiding laser beams (4, 5, 7, 6) thereto and/or therefrom to record a hologram therein or to reconstruct it, and
—surface electrodes (8) arranged on opposite sides of the holographic recording layer (3) for providing a d.c. electric field apt to increase the brightness of the reconstructed light beam (7) during hologram reconstruction.

2. The optical integrated circuit according to claim 1 wherein the first bismuth sillenite group substance is bismuth silicon oxide ($Bi_{12}SiO_{20}$) or bismuth germanium oxide ($Bi_{12}GeO_{20}$), the second bismuth sillenite group substance is Ga- and Ca-doped bismuth titanium oxide ($Bi_{12}TiO_{20}$), and the third bismuth sillenite group substance is undoped bismuth titanium oxide ($Bi_{12}TiO_{20}$).

3. The optical integrated circuit according to claim 1 wherein the first bismuth sillenite group substance is bismuth silicon oxide ($B_{12}SiO_{20}$), the second bismuth sillenite group substance is Ga- and Ca-doped bismuth germanium oxide ($Bi_{12}GeO_{20}$), and the third bismuth group substance is undoped bismuth germanium oxide ($Bi_{12}GeO_{20}$).

4. A method for manufacturing an optical integrated circuit provided with an erasable holographic structure, comprising the steps of:
(a) forming on a substrate (1) made of a first bismuth sillenite group substance a light guiding layer (2) made of a second bismuth sillenite group substance, by epitaxial growth from a melt, said second bismuth sillenite group substance having a higher refractive index than the first bismuth sillenite group substance and absorbing little of the light being guided,
(b) providing a cavity in said formed light guiding layer,
(c) forming by epitaxial growth in said cavity a holographic recording layer (3) which is made of a third bismuth sillenite group substance having a higher refractive index than the first bismuth sillenite group substance, and a high degree of photoconductivity to enable the recording of an erasable hologram therein, said light guiding layer (2) being provided around said holographic recording layer (3) for guiding laser beams (4, 5, 7, 6) thereto and/or therefrom to record a hologram therein or to reconstruct it, and
(d) providing surface electrodes (8) arranged on opposite sides of the holographic recording layer (3)

EP 0 075 180 B1

for producing a d.c. electric field apt to increase the brightness of the reconstructed light beam (7) during hologram reconstruction.

5. A method according to claim 4, wherein the first bismuth sillenite group substance is selected from the group consisting of bismuth sillenite oxide ($Bi_{12}SiO_{20}$) and bismuth germanium oxide ($Bi_{12}GeO_{20}$).

6. A method according to claim 5, wherein the second bismuth sillenite group substance is Ga- and Ca-doped bismuth titanium oxide ($Bi_{12}TiO_{20}$) grown from a $Bi_2O_3/TiO_2$ melt in a molar percent ratio of 92:8.

7. A method according to claim 5, wherein the second bismuth sillenite group substance is Ga- and Ca-doped bismuth germanium oxide ($Bi_{12}GeO_{20}$), and the third bismuth sillenite group substance is undoped bismuth germanium oxide ($Bi_{12}GeO_{20}$).

8. A method according to claim 5, wherein the second bismuth sillenite group substance is Ga- and Ca-doped bismuth silicon oxide ($Bi_{12}SiO_{20}$).

**Patentansprüche**

1. Mit einer löschbaren holographischen Struktur versehene optisch integrierte Schaltung, umfassend ein Substrat (1) aus einer einer ersten Gruppe angehörenden Wismutsillenitsubstanz, eine durch epitaxiales Wachstum auf dem Substrat (1) gebildete lichtleitende Schicht (2) aus einer einer zweiten Gruppe angehörenden Wismutsillenitsubstanz, deren Brechungsindex höher ist als derjenige der ersten Wismutsillenitsubstanz und die (nur) wenig des geleiteten Lichts absorbiert, eine durch epitaxiales Wachstum in einer in der lichtleitenden Schicht (2) vorgesehenen Ausnehmung gebildete holographische Aufzeichnungsschicht (3) aus einer einer dritten Gruppe angehörenden Wismutsillenitsubstanz höheren Brechungsindex als ihn die der ersten Gruppe angehörende Wismutsillenitsubstanz aufweist, die einen (so) hohen Grad an Photoleitfähigkeit aufweist, daß darin die Aufzeichnung eines löschbaren Hologramms möglich wird, wobei die lichtleitende Schicht (2) um die holographische Aufzeichnungsschicht (3) herum vorgesehen ist, um für eine Aufzeichnung eines Hologramms in dieser oder für eine Rekonstruktion desselben Laserstrahlen (4, 5, 7, 6) zu dieser hin- und/oder von dieser wegzuleiten und auf einander gegenüberliegenden Seiten der holographischen Aufzeichnungsschicht (3) angeordnete Oberflächenelektroden (8) zur Bereitstellung eines elektrischen Gleichstromfeldes, das die Helligkeit des rekonstruierten Lichtstrahls (7) während der Hologrammrekonstruktion zu erhöhen vermag.

2. Optisch integrierte Schaltung nach Anspruch 1, dadurch gekennzeichnet, daß die der ersten Gruppe angehörende Wismutsillenitsubstanz aus Wismutsiliziumoxid ($Bi_{12}SiO_{20}$) oder Wismutgermaniumoxid ($Bi_{12}GeO_{20}$), die der zweiten Gruppe angehörende Wismutsillenitsubstanz aus mit Ga- und Ca-dotiertem Wismuttitanoxid ($Bi_{12}TiO_{20}$) und die der dritten Gruppe angehörende Wismutsillenitsubstanz aus nicht-dotiertem Wismuttitanoxid ($Bi_{12}TiO_{20}$) bestehen.

3. Optisch integrierte Schaltung nach Anspruch 1, dadurch gekennzeichnet, daß die der ersen Gruppe angehörende Wismutsillenitsubstanz aus Wismutsiliziumoxid ($Bi_{12}SiO_{20}$), die der zweiten Gruppe angehörende Wismutsillenitsubstanz aus mit Ga- und Ca-dotiertem Wismutgermaniumoxid ($Bi_{12}GeO_{20}$) und die der dritten Gruppe angehörende Wismutsillenitsubstanz aus nicht-dotiertem Wismutgermaniumoxid ($Bi_{12}GeO_{20}$) bestehen.

4. Verfahren zur Herstellung einer mit einer löschbaren holographischen Struktur versehenen optisch integrierten Schaltung, gekennzeichnet durch folgende Stufen:

(a) Ausbilden einer lichtleitenden Schicht (2) aus einer einer zweiten Gruppe angehörenden Wismutsillenitsubstanz auf einem Substrat (1) aus einer einer ersten Gruppe angehörenden Wismutsillenitsubstanz durch epitaxiales Wachstum aus einer Schmelze, wobei die der zweiten Gruppe angehörende Wismutsillenitsubstanz einen höheren Brechungsindex aufweist als die der ersten Gruppe angehörende Wismutsillenitsubstanz und (nur) wenig des geleiteten Lichts absorbiert,

(b) Bereitstellen einer Ausnehmung in der gebildeten lichtleitenden Schicht,

(c) Ausbilden einer holographischen Aufzeichnungsschicht (3) aus einer einer dritten Gruppe angehörenden Wismutsillenitsubstanz mit höherem Brechungsindex als ihn die der ersten Gruppe angehörende Wismutsillenitsubstanz aufweist und eines (so) hohen Grades an Photoleitfähigkeit, daß darin die Aufzeichnung eines löschbaren Hologramms ermöglicht wird, in der Ausnehmung durch epitaxiales Wachstum, wobei die lichtleitende Schicht (2) um die holographische Aufzeichnungsschicht (3) herum vorgesehen ist, um für eine Aufzeichnung eines Hologramms in dieser oder für eine Rekonstruktion desselben Laserstrahlen (4, 5, 7, 6) zu dieser hin- und/oder von dieser wegzuleiten und

(d) Bereitstellen von aufeinander gegenüberliegenden Seiten der holographischen Aufzeichnungsschicht (3) angeordneten Oberflächenelektroden (8) zur Bildung eines elektrischen Gleichstromfeldes, das die Helligkeit des rekonstruierten Lichtstrahls (7) während der Hologrammrekonstruktion zu erhöhen vermag.

5. Verfahren nach Anspruch 4, dadurch gekennzeichnet, daß die der ersten Gruppe angehörende Wismutsillenitverbindung aus der Gruppe Wismutsillenitoxid ($Bi_{12}SiO_{20}$) und Wismutgermaniumoxid ($Bi_{12}GeO_{20}$) ausgewählt ist.

6. Verfahren nach Anspruch 5, dadurch gekennzeichnet, daß die der zweiten Gruppe angehörende Wismutsillenitverbindung aus mit Ga- und Ca-dotiertem Wismuttitanoxid ($Bi_{12}TiO_{20}$), das aus einer $Bi_2O_3/TiO_2$-Schmelze in einem molprozentualen Verhältnis von 92:8 wachsengelassen wurde, besteht.

5

7. Verfahren nach Anspruch 5, dadurch gekennzeichnet, daß die der zweiten Gruppe angehörende Wismutsillenitverbindung aus mit Ga- und Ca-dotiertem Wismutgermaniumoxid ($Bi_{12}GeO_{20}$) und die der dritten Gruppe angehörende Wismutsillenitsubstanz aus nicht-dotiertem Wismutgermaniumoxid ($Bi_{12}GeO_{20}$) bestehen.

8. Verfahren nach Anspruch 5, dadurch gekennzeichnet, daß die der zweiten Gruppe angehörende Wismutsillenitsubstanz aus mit Ga- und Co-dotiertem Wismutsiliziumoxid ($Bi_{12}SiO_{20}$) besteht.

**Revendications**

1. Circuit intégré optique doté d'une structure holographique effaçable, comprenant:
—un substrat (1) fait d'une première substance du groupe du sillénite de bismuth,
—une couche (2) de guidage de lumière qui est formée sur ledit substrat (1) par croissance épitaxiale et est faite d'une deuxième substance du groupe de sillénite de bismuth possédant un plus grand indice et réfraction que la première substance de sillénite de bismuth et absorbant peu la lumière guidée,
—une couche d'enregistrement holographique (3) qui est formée par croissance épitaxiale dans une cavité ménagée dans la couche de guidage de lumière (2) et qui est faite d'une troisième substance du groupe du sillénite de bismuth possédant un plus grand indice de réfraction que la première substance du groupe du sillénite de bismuth et un degré élevé de photoconductivité afin d'y permettre l'enregistrement d'un hologramme effaçable, ladite couche de guidage de lumière (2) étant disposée autour de ladite couche d'enregistrement holographique (3) afin de guider des faisceaux lasers (4, 5, 7, 6) y arrivant et, ou bien, en repartant pour y enregistrer un hologramme ou l'y reconstituer, et
—des électrodes de surface (8) disposées sur les côtés opposés de la couche d'enregistrement holographique (3) afin de produire un champ électrique continu susceptible d'augmenter la luminance du faisceau lumineux restitué (7) pendant la restitution de l'hologramme.

2. Circuit intégré optique selon la revendication 1, où la première substance du groupe du sillénite de bismuth est l'oxyde de bismuth et de silicium ($Bi_{12}SiO_{20}$) ou l'oxyde de bismuth et de germanium ($Bi_{12}GeO_{20}$), la deuxième substance du groupe de sillénite de bismuth est l'oxyde de bismuth et de titane ($Bi_{12}TiO_{20}$) dopé par Ga et Ca, et la troisième substance du groupe du sillénite de bismuth est l'oxyde de bismuth et de titane ($Bi_{12}TiO_{20}$) non dopé.

3. Circuit intégré optique selon la revendication 1, où la première substance du groupe du sillénite de bismuth est l'oxyde de bismuth et de silicium ($B_{12}SiO_{20}$), la deuxième substance du groupe du sillénite de bismuth est l'oxyde de bismuth et de germanium ($Bi_{12}GeO_{20}$) dopé par Ga et Ca, et la troisième substance du groupe du sillénite de bismuth est l'oxyde de bismuth et de germanium ($Bi_{12}GeO_{20}$) non dopé.

4. Procédé de fabrication d'un circuit intégré optique doté d'une structure holographique effaçable, comprenant les opérations suivantes:
(a) former sur un substrat (1) fait d'une première substance du groupe du sillénite de bismuth une couche (2) de guidage de lumière faite d'une deuxième substance du groupe du sillénite de bismuth par croissance épitaxiale à partir d'une phase fondue, la deuxième substance du groupe en sillénite de bismuth ayant un indice de réfraction plus grand que la première substance du groupe du sillénite de bismuth et absorbant peu la lumière guidée,
(b) produire une cavité dans ladite couche de guidage de lumière ainsi formée,
(c) former par croissance épitaxiale dans ladite cavité une couche d'enregistrement holographique (3) qui est faite d'une troisième substance du groupe du sillénite de bismuth possédant un indice de réfraction plus grand que la première substance du groupe du sillénite de bismuth et un degré élevé de photoconductivité afin d'y permettre l'enregistrement d'un hologramme effaçable, ladite couche de guidage de lumière (2) étant disposée autour de ladite couche d'enregistrement holographique (3) afin de guider des faisceaux laser (4, 5, 7, 6) y arrivant et, ou bien, en repartant pour y enregistrer un hologramme ou l'y restituer, et
(d) produire des électrodes de surface (8) disposées sur les côtés opposés de la couche d'enregistrement holographique (3) afin de produire un champ électrique continu susceptible d'augmenter la luminance du faisceau lumineux restitué (7) pendant la restitution de l'hologramme.

5. Procédé selon la revendication 4, où la première substance du groupe du sillénite de bismuth est choisie dans le groupe comprenant l'oxyde de bismuth et de silicium ($Bi_{12}SiO_{20}$) et l'oxyde de bismuth et de germanium ($Bi_{12}GeO_{20}$).

6. Procédé selon la revendication 5, où la deuxième substance du groupe du sillénite de bismuth est l'oxyde de bismuth et de titane ($Bi_{12}TiO_{20}$) dopé par Ga et Ca, qui a été obtenu par croissance à partir d'une phase fondue de $Bi_2O_3/TiO_2$ dans un rapport molaire de 92:8.

7. Procédé selon la revendication 5, où la deuxième substance du groupe du sillénite de bismuth est l'oxyde de bismuth et de germanium ($Bi_{12}GeO_{20}$) dopé par Ga et Ca, et la troisième substance du groupe du sillénite de bismuth est l'oxyde de bismuth et de germanium ($Bi_{12}GeO_{20}$) non dopé.

8. Procédé selon la revendication 5, où la deuxième substance du groupe du sillénite de bismuth est l'oxyde de bismuth et de silicium ($Bi_{12}SiO_{20}$) dopé par Ga et Ca.

FIG. 1

FIG. 2(a)

FIG. 2(b)

FIG. 2(c)

FIG. 2(d)

FIG. 2(e)